# EUROPÄISCHE PATENTSCHRIFT

(11) **EP 1 121 762 B1**
(45) Veröffentlichungstag und Bekanntmachung des Hinweises auf die Patenterteilung: **03.11.2004**
(21) Anmeldenummer: 99953566.9
(22) Anmeldetag: 21.08.1999
(51) Int. Cl.: H03M 13/35, H03M 13/00, H03M 13/29

(54) **VERFAHREN ZUR KODIERUNG ODER DEKODIERUNG UND VORRICHTUNG ZUM KODIEREN ODER DEKODIEREN**
METHOD FOR CODING OR DECODING AND DEVICE FOR CODING OR DECODING
PROCEDE ET DISPOSITIF DE CODAGE OU DE DECODAGE

(30) Priorität: 12.10.1998 DE 19846721
(43) Veröffentlichungstag der Anmeldung: 08.08.2001
(73) Patentinhaber: ROBERT BOSCH GMBH, 70442 Stuttgart (DE)
(72) Erfinder: LAUMEN, Josef, D-31141 Hildesheim (DE); ADI, Wael, D-38108 Braunschweig (DE)
(86) Internationale Anmeldenummer: PCT/DE1999/002632
(87) Internationale Veröffentlichungsnummer: WO 2000/022740

(56) Entgegenhaltungen:
- WO-A-96/32781
- JP-A- 9 116 524
- CYGAN D ET AL: "A CONCATENATED TWO-STAGE ADAPTIVE (CTSA) ERROR CONTROL SCHEME FOR DATA STRANSMISSION IN TIME-VARYING CHANNELS" IEEE TRANSACTIONS ON COMMUNICATIONS,US,IEEE INC. NEW YORK, Bd. 43, Nr. 2/04, PART 02, 1. Februar 1995 (1995-02-01), Seiten 795-803, XP000502588 ISSN: 0090-6778

## Beschreibung

### Stand der Technik

Die Erfindung geht aus von verfahren oder Vorrichtungen nach der Gattung der unabhängigen Patentansprüche. Aus dem Handbuch für die Telekommunikation, Springer Verlag, 1998 Seite 1/37 sind bereits Kodierungs- und Dekodierungsverfahren bekannt, bei denen ein äußerer Code und ein innerer Code verwendet werden. Dabei wird als äußerer Code ein Blockcode und als innerer Code ein Faltungsscode vorgeschlagen. Weiterhin ist es bekannt durch Punktierung und/oder Wiederholung ausgewählter Bits (Unequal Repetition) von Faltungscode eine Anpassung der Datenrate an eine vorgegebene Datenrate eines Übertragungskanals zu erreichen.

Aus der JP 9116524 entsprechend US 5,883,923 ist ein Verfahren zur Kodierung von Quelldaten mit einem Blockkodierschritt und einem nachgeordneten inneren Kodierschritt, insbesondere einem Faltungskodierschritt bekannt, wobei die Quelldatenrate variieren kann. Für unterschiedliche Quelldatendaten werden CRC-Codes unterschiedlicher Länge benutzt.

### Vorteile der Erfindung

Die erfindungsgemäßen Verfahren bzw. die erfindungsgemäßen Vorrichtungen nach der Gattung der unabhängigen Patentansprüche haben demgegenüber den Vorteil, daß eine Anpassung der Datenrate durch Beeinflussung der Blockkodierung erfolgt. Es kann so mit einfachen Mitteln die Fehlererkennung und Fehlerkorrektur verbessert werden. Vorteilhafte Weiterbildungen und Verbesserungen ergeben sich aus den Maßnahmen der abhängigen Patentansprüche. Eine

Feinanpassung der Datenrate kann insbesondere durch das Punktieren oder Wiederholen/Auffüllen einzelner, weniger Bits (1 oder 2 Bits lediglich) erreicht werden. Bei mehreren Datenquellen kann durch die Anpassung der Blockkodierung das Signalrauschverhältnis der einzelnen Datenquellen einander angepaßt werden, wenn die Datenstöme dieser Datenquellen im Zeitmultiplex über einen einzigen Übertragungskanal gesendet werden.

### Zeichnung

Es zeigen die Figur 1 ein herkömmliches Verfahren der Kodierung/Dekodierung, Figur 2 das erfindungsgemäße Verfahren zur Kodierung/Dekodierung, Figur 3 die Feinanpassung der Datenrate, Figur 4 eine herkömmliche Methode zur Einstellung des Signalrauschverhältnisses bei mehreren Datenquellen und Figur 5 das erfindungsgemäße Verfahren zur Einstellung des Signalrauschverhältnisses bei mehreren Datenquellen.

### Beschreibung

In Datenübertragungssystemen ist es üblich, daß aufgrund von technischen Gegebenheiten nicht jede beliebige Datenrate auf dem physikalischen Kanal realisiert werden kann. Statt dessen sind lediglich einige diskrete Werte für die zu übertragene Kanaldatenrate zulässig, wie z.B. im UMTS System. Dort sind (bei Single-Code-Übertragung) Kanaldatenraten von 32*2k kbit/s, k=0...6, spezifiziert, d.h. die diskreten Werte 32 kbps, 64 kbps, 128 kbps, 256 kbps, 512 kbps und 1024 kbps. Trotzdem soll - aus Sicht eines Benutzers - Informationsübertragung mit beliebiger Quelldatenrate von UMTS-Systemen unterstützt werden. Zu übermittelnde Information muß insbesondere in mobilen Kommunikationssystemen vor der Übertragung über den physikalischen Kanal mittels Kanalkodierverfahren geschützt werden, um möglichst fehlerfreien Empfang zu gewährleisten.

Kanalkodierverfahren erlauben entweder Fehlerkorrektur, Fehlererkennung oder Kombinationen aus Korrektur und Erkennung von Übertragungsfehlern auf Empfängerseite. Besonders in Systemen der digitalen mobilen Kommunikation werden hochentwickelte Kanalkodierverfahren eingesetzt, um mit den Widrigkeiten der Übertragung von digitalen Signalen über mobile Kanäle zurechtzukommen. I.a. besteht ein solches Kanalkodierverfahren aus einem inneren und einem äußeren Code. Die innere Kodierung erfolgt in der Regel mittels Faltungscodes oder Turbocodes und wird meist am Empfänger mit Hilfe eines Viterbi- oder eines Maximum A Posteriori (MAP)-Decoders dekodiert. Typischerweise kommen solche Decoder dieser beiden Typen zum Einsatz, welche die Fähigkeit haben, Fehler zu korrigieren, jedoch weder Fehler erkennen können, noch eine Aussage über die Zuverlässigkeit, bzw. Richtigkeit der dekodierten Bits liefern. Zur zusätzlichen Erkennung von Fehlentscheidungen der inneren Dekodiereinrichtung werden dann äußere Codes auf Basis der CRC-Codes (cyclic redundancy check) oder Reed-Solomon-Codes eingesetzt.
Kanalkodierverfahren der derzeitigen UMTS Spezifikation sehen bei Verwendung von Faltungs- oder Turbocodes Coderaten von ½, 1/3 und ¼ vor. Im Hinblick auf die o. g. diskreten Kanaldatenraten bedeutet dies, daß lediglich diskrete Quelldatenraten von ca. RCode*32*2k kbit/s erlaubt sind. Im Fall eines Datenübertragungssystems ohne zusätzliche Ratenadaption dürften z.B. bei Coderate RCode = ½ lediglich Quelldatenraten von ca. 16, 32, 64, 128, 256 oder 512 kbps zugelassen werden.
Um jedoch beliebige Quelldatenraten zu unterstützen, wird nach der Kanalkodierung eine Anpassung der Datenrate (Rate Matching) der kanalkodierten Information an die diskrete Kanaldatenrate vorgenommen. Der vorgesehene Algorithmus für diese Adaption der Datenraten sieht lediglich das Punktieren, bzw. die Wiederholung ausgewählter Bits im Datenstrom vor. Punktieren und Wiederholen einzelner Bits sind die einfachsten aller Mechanismen zum Fehlerschutz.

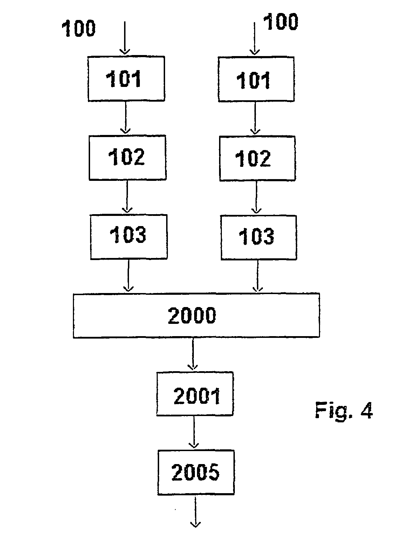

Werden vereinzelt Bits eines Datenrahmens konstanter Dauer auspunktiert, d.h. weggestrichen und nicht übertragen, so sinkt die Datenrate auf dem Kanal, während beim Wiederholen von Bits zusätzliche Repliken dieser einzelnen, ausgewählten Bits in den Datenstrom eingebettet werden und so die effektive Datenrate auf dem Kanal angehoben wird, s. Figur 3. Beide Mechanismen bieten allerdings nur recht geringen Schutz gegen fehlerhafte Übertragung über den physikalischen Kanal; beim Punktieren wird die Redundanz des inneren Codes verringert, d.h. der Fehlerschutz wird ebenfalls verringert und beim Wiederholen (unequal repetition) deckt der zusätzlich eingeführte Schutz nicht alle Bits eines Datenrahmens ab, sondern bezieht sich lediglich auf einzelne Bits des Rahmens.

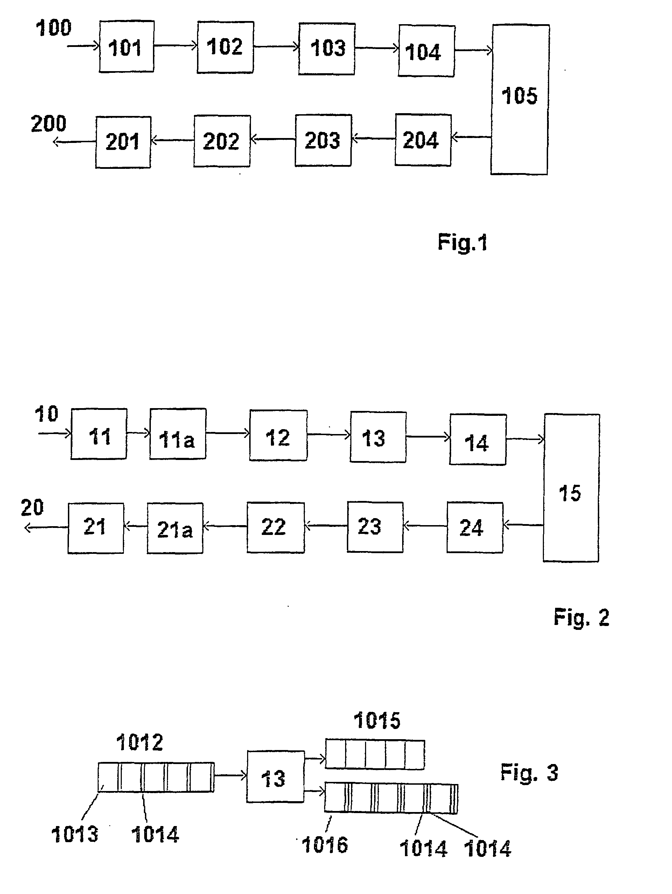

In der Figur 1 wird ein herkömmliches Verfahren zur Anpassung einer Datenrate an einen Übertragungskanal 105 dargestellt. Die Quelldaten 100 werden zunächst im Funktionsblock 101 einer Blockkodierung unterzogen. Diese Blockkodierung 101 wird auch als äußere Kodierung bezeichnet. Üblicherweise wird für die äußere Blockkodierung 101 ein CRC-Code verwendet. In einem darauf folgenden Schritt 102 einer inneren Kodierung, typischerweise einer Faltungskodierung oder Turbokodierung unterzogen. In einem darauf folgenden Schritt 103 erfolgt dann eine Anpassung an die mögliche Datenrate des Übertragungskanals 105. Wenn die Daten nach der Kanalkodierung 102 die mögliche Datenrate des Übertragungskanals 105 übersteigen erfolgt eine Punktierung der faltungskodierten Daten, so daß die Datenmenge entsprechend verringert wird. Wenn die Datenrate nach der Faltungskodierung 102 geringer ist als die mögliche Datenrate auf dem Übertragungskanal 105, so werden einzelne Bits wiederholt oder es werden Füllbits eingefügt um die Datenrate entsprechend zu erhöhen. Nach der Datenratenanpassung 103 erfolgt noch ein Interleavingschritt 104, bei dem durch zeitliche Vertauschung des Aussendezeitpunkts der einzelnen Bits die Übertragungssicherheit weiter erhöht wird. Entsprechend werden dann die Daten über den Datenkanal 105 mit der vorgegebenen Bitrate übertragen. Die Dekodierung erfolgt in den Funktionsblöcken 201 bis 204. Im Funktionsblock 204 erfolgt zunächst ein De-Interleaving, bei dem die ursprüngliche zeitliche Reihenfolge der Bits wieder hergestellt wird. Im darauf folgenden Anpassungsschritt 203 wird die Datenratenanpassung des Funktionsblocks 103 wieder rückgängig gemacht. Im Fall der Punktierung erfolgt dies durch Einfügen von Bits ohne Informationsgehalt, im Fall der Wiederholung durch Ausblenden einzelner Bits oder durch das Zusammenfassen mehrerer Bits zu einem einzigen Bit. Im darauf folgenden Funktionsblock 202 erfolgt die innere Dekodierung (Faltungs- oder Turbodekodierung) und im darauf folgenden Schritt 201 die Blockdekodierung. Sofern es nicht zu schwerwiegenden Übertragungsstörungen gekommen ist sollten dann die dekodierten Daten 200 den ursprünglichen Quelldaten 100 entsprechen.

Die einzelnen Kodier- und Dekodiermechanismen unterscheiden sich hinsichtlich ihrer Funktionen. Blockcodes werden typischerweise lediglich zur Fehlererkennung verwendet und liefern einen Indikator über die Integrität/Zuverlässigkeit der empfangenen Daten. Der innere Code (Faltungscode oder Turbocode) ist dagegen ein geeignetes Mittel, um Übertragungsfehler zu korrigieren, sie erlauben jedoch nur bedingt (oder gar nicht) eine Aussage darüber ob die dekodierten Daten zuverlässig sind oder nicht.

Die Erfindung verbessert den Gesamt-Fehlerschutz eines Übertragungssystems nach Figur 1, indem das Rate Matching mittels eines Codes variabler Blocklänge durchgeführt wird. Hierzu wird die Struktur des Übertragungssystems gemäß Figur 2 verändert. Die Anpassung der Quelldatenrate an die erlaubte Übertragungsdatenrate erfolgt durch eine Kombination aus den in Figur 1 dargestellten Mitteln zum Fehlerschutz (innere und äußere Kodierung) und einer zusätzlichen (einfachen) Fehlerschutzeinrichtung auf Basis eines variablen Blockkodes. Dieser doppelte Fehlerschutz (s. Figur 2), bestehend aus innerem und äußerem Kanalkodierverfahren bietet gegenüber dem in Figur 1 dargestellten System folgenden Vorteil: der Fehlerschutz, der zum Zwecke der Anpassung der Datenrate eingeführt wird, erstreckt sich über die Gesamtheit aller Bits eines Datenrahmens und ist nicht auf einzelne, ausgewählte Bits im Datenstrom beschränkt. Es übertrifft somit die Fehlerschutzeigenschaften des in Figur 1 dargestellten Systems und verbessert die Bandbreiteneffizienz und/oder Kapazität des Kanals eines Datenübertragungssystems (zumindest in Mobilfunksystemen). Gerade in Mobilfunksystemen kann bei verbessertem Fehlerschutz die Sendeleistung eines Signals auf der Luftschnittstelle gesenkt werden, ohne die Empfangsqualität zu beeinflussen. Dies ermöglicht einem Betreiber von Mobilfunknetzen, die Anzahl der Benutzer seines Netzes zu erhöhen, d.h. die (Kanal-)Kapazität des Mobilfunknetzes zu steigern.
Wie in Figur 2 zu erkennen, wird der ursprüngliche Block des Rate Matching von einer sehr einfachen Korrektureinheit ersetzt und der vorgeschlagene variable Blockkode wird anstelle des ursprünglichen äußeren (meist CRC-) Codes eingesetzt. CRC-Codes werden i.a. lediglich zur Erkennung von Fehlentscheidungen des inneren Decoders eingesetzt, um fehlerhaft dekodierte Datenrahmen zu erkennen und als solche markieren zu können. Beim Einsatz von variablen Blockkodes hingegen können sowohl dessen Fehlerkorrektur-, als auch Fehlererkennungseigenschaften ausgenutzt werden.
Solange die mittels eines variablen Blockkodes hinzugefügte Redundanz nicht weniger Bits enthält, als die Redundanz des in Figur 1 dargestellten CRC-Codes, bietet der variable Blockkode mindestens äquivalente Fehlerschutzmöglichkeiten. Überschreitet die Redundanz in Figur 2 die CRC-Redundanz in Figur 1, so kann entweder die Zuverlässigkeit der Fehlererkennung weiter gesteigert werden oder aber eine zusätzliche Fehlerkorrektur ermöglicht werden. In der Schrift: "Fast Burst Error-Correction Scheme with Fire-Code, Wael Adi, IEEE Transactions on Computers, vol. c-33, No. 7, July 1984" wird ein Verfahren zur Blockkodierung beschrieben, das ein flexibles Abgleichen zwischen Fehlererkennung und Fehlerkorrektur erlaubt. Dabei können die Möglichkeiten der Fehlererkennung auf Kosten sinkender Korrekturfähigkeit ohne Änderung der Kodier- oder Dekodiermechanismen flexibel erhöht und überwacht werden und umgekehrt.
Dank der geringen Komplexität der Implementierung von variablen Blockkodes reduziert sich so die Gesamtkomplexität des Übertragungssystems.

Das erfindungsgemäße Verfahren wird in der Figur 2 dargestellt. Die Quelldaten 10 werden zunächst einer äußeren Blockkodierung 11 unterzogen. Im Unterschied zu Figur 1 ist hier jedoch die Höhe der eingefügten Redundanz und somit die Größe des ausgegebenen Datenblocks einstellbar. Es handelt sich um eine Blockkodierung mit variabler Redundanz und Blockgröße. Die Variation der Redundanz und somit der Blockgröße wird dabei in Kenntnis der nachfolgenden Kodierschritte so gewählt, daß eine möglichst genaue Anpassung der Datenrate an den Übertragungskanal 15 erfolgt. In einem nachfolgenden Funktionsblock 12 erfolgt dann eine innere Kodierung z.B. mittels eines Faltungscodes oder eines Turbocodes. Derartige Kodierer 12 haben typischerweise Übertragungsraten von 1/2, 1/3, 1/4, usw., das heißt aus einem Input-Bit werden zwei Output-Bits bzw. 3 bzw. 4 Output-Bits erzeugt. Die kodierte Bitrate die den inneren Kodierer 12 verläßt ist somit immer das Doppelte, Dreifache, Vierfache der vom Blockkoder 11 zur Verfügung gestellten Datenrate. Durch die Anpassung der Datenrate des Blockcodes 11 kann somit mit einer Genauigkeit von einem Bit (1/2 Faltungskodierung), zwei Bit (1/3 Faltudgskodierung), bzw. drei Bit (1/4 Faltungskodierung) die Datenrate an die Datenrate des Übertragungskanals 15 angepaßt werden. Es wird daher eine Feinanpassung 13 vorgesehen, die entsprechend in der Lage ist, eine Feinanpassung in der Größenordnung von einem, zwei oder drei Bit entsprechend der gewählten Datenrate des inneren Kodierers 12 vorzunehmen. Durch die Feinanpassung 13 kann somit eine bitgenaue Anpassung der Datenrate an die Datenrate des Übertragungskanals 15 erfolgen. Zwischen der Feinanpassung 13 und dem Datenkanal 15 ist zusätzlich noch ein Interleaver 14 vorgesehen, der in bekannter Weise ein Interleaving der Daten bewirkt.
Optional kann ein zusätzliches Interleaving 11a zwischen den Blöcken 11 und 12 vorgesehen werden, um die Fehlerschutzeigenschaften des Blockkodes 11 weiter zu erhöhen. Dieses Interleaving erstreckt sich typischerweise über mehrere Blöcke des Codes 11.

Die Dekodierung der Daten erfolgt entsprechend in den Funktionsblöcken 21 bis 24. Im Funktionsblock 24, der die über den Kanal 15 übertragenen Daten erhält, erfolgt zunächst ein De-Interleaving, das heißt die ursprüngliche Reihenfolge der kanalkodierten Daten wird wieder hergestellt. Im Schritt 23 erfolgt dann eine Feinanpassung der Datenrate, das heißt sofern einzelne Bits (1, 2, 3 usw.) hinzugefügt oder durch Punktieren entfernt wurden, werden nun entsprechende Bits wieder entfernt oder hinzugefügt. Im darauf folgenden Funktionsblock 22 erfolgt dann die innere Dekodierung bei der es sich in der Regel um eine Faltungsoder Turbodekodierung handelt. Im darauf folgenden Funktionsblock 21 erfolgt dann die Blockdekodierung um wieder die ursprünglichen Daten 20 zu erhalten, die dann einer Datensenke zur Verfügung gestellt werden. Wurde das optional Interleaving 11a durchgeführt, so muß auch das optional De-Interleaving 21a ausgeführt werden, um die Daten wieder in der entsprechenden zeitlichen Reihenfolge zu sortieren.

Es muß natürlich zwischen dem Sender und dem Empfänger eine Nachricht darüber ausgetauscht werden, wie die Kodierung erfolgte und wie entsprechend dann die Dekodierung auszusehen hat. Wenn beispielsweise für die innere Kodierung immer eine bestimmte Methode verwendet wird so muß nun mitgeteilt werden welche Blockkodierung im Funktionsblock 11 verwendet wird.

In der Figur 3 wird die Feinanpassung der Datenrate an den Übertragungskanal beschrieben. Dem Funktionsblock 13 werden hier exemplarische Daten 1012 zugeführt. Um die Funktionsweise der Feinanpassung zu erläutern, sind einzelne Rahmen dargestellt, die aus jeweils 9 Bits 1013 und einem extra gekennzeichneten Einzelbit 1014 besteht. Zur Feinanpassung kann nun die Feinanpassungseinheit 13 dieses einzeln gekennzeichnete Bit 1014 beeinflussen. Im oberen Funktionspfad wird durch Weglassen des Bits 1014 ein verkürzter Datenstrang 1015 geschaffen (Punktierung; bleibt die zeitliche Dauer der Übertragung eines Datenrahmens konstant, dann sinkt somit die Datenrate). Im unteren Teil der Zeichnung wird eine Alternative gezeigt, bei der durch Verdopplung des Bits 1014 ein verlängerter Bitstrom 1016 geschaffen wird (Unequal Repetition; bleibt die zeitliche Dauer der Übertragung eines Datenrahmens konstant, dann steigt die Datenrate). Durch diese Methode erfolgt eine Feinanpassung der Datenrate an den Übertragungskanal 15.

Ein Beispiel: Informationen sollen mit einer Quelldatenrate von 8 kbit/s über ein herkömmliches UMTS System übertragen werden, wobei Fehlerkorrektur mittels eines Faltungscodes (innerer Code) der Rate 1/3 gewährleistet werden soll und Restfehlererkennung über einen äußeren CRC-Code mit 8 Bits Redundanz realisiert werden soll. Gemäß der UMTS Spezifikationen wird der Quelldatenfluß in Datenrahmen der Länge 10 ms unterteilt, d.h. auf jeden Rahmen entfallen 80 Informationsbits. Zur Restfehlererkennung werden diese 80 Bits CRC kodiert und dazu mit 8 Bits Redundanz versehen. Diesen 88 Bits werden nun zusätzlich 8 Tail Bits angehängt, um den Faltungskodierer nach dem Kodieren eines Datenblocks auf Nullzustand zurückzusetzen (reset) und somit ein möglichst zuverlässiges Arbeiten des empfängerseitigen Viterbi-Decoders zu erlauben. Mit Hilfe des Faltungscodes (Rate 1/3) werden diese 96 Bits zu 288 Bits kodiert, d.h. die Datenrate der kodierten Bits beträgt 28,8 kbit/s. Diese Rate ist weit entfernt von den nächsten erlaubten Kanaldatenraten (16 kbps oder 32 kbps); eine Ratenanpassung an die nächstgelegene Rate, also an eine Kanaldatenrate von 32 kbit/s (320 Bits auf 10 ms) ist nötig. Der Beschreibung in "UMTS (xx.04) V0.5.0, UTRA FDD, multiplexing, channel coding and interleaving description"entsprechend wird nun jedes neunte Bit wiederholt, um die 10 ms langen Rahmen auf 320 Bits aufzufüllen. Der zusätzliche Fehlerschutz durch Bit-Wiederholung erstreckt sich somit hauptsächlich auf jene 288 / 9 = 32 Bits, die tatsächlich wiederholt werden. Eine Anpassung der Datenrate entsprechend der Erfindung würde dagegen erhöhten Fehlerschutz für alle Bits eines Rahmens nach sich ziehen. Um die zu übertragenden Informationsbits ebenfalls auf die gleiche Kanaldatenrate von 32 kbit/s abzubilden, wird den 80 Bits eines Rahmens mit Hilfe des VRC-Codes zunächst 19 Bits Redundanz zugefügt. An diese 99 Bits werden ebenfalls 8 Tail Bits angehängt (s.o.). Die Faltungskodierung (Rate 1/3) resultiert daraufhin in 3*107=321 Bits pro Rahmen der Dauer 10 ms. Diese Anzahl ist bereits sehr nahe an der erlaubten Rahmenstruktur von 320 bits pro Rahmen. Lediglich ein Bit eines jeden Datenrahmens ä 321 Bits wird nun in einer simplen Korrektureinheit punktiert, um den 32 kbit/s zu entsprechen. Diese Korrektureinheit (Block 13 in Figur 2) befindet sich zwischen den beiden Blöcken 12und 14 und arbeitet vorzugsweise auf Bits, die der zuvor eingefügten VRC-Redundanz entsprechen. Bei dieser Korrektureinheit handelt es sich stets um das Punktieren/Wiederholen von lediglich keinem, einem oder maximal zwei Bits (nur bei Rate ¼ des Kanalcodes).
Im bestehenden System nach "UMTS (xx.04) V0.5.0, UTRA FDD, multiplexing, channel coding and interleaving description"werden lediglich 8 Bits CRC zur Fehlererkennung eingefügt, während nach dieser Erfindung in diesem Beispiel 19 Bits VRC-Redundanz hinzugefügt werden. Die 11 zusätzlich eingefügten Bits können dazu verwendet werden, die Möglichkeiten der Fehlererkennung des Systems zu verbessern und/oder Korrektur von Fehlentscheidungen des inneren (Viterbi-) Decoders zu ermöglichen.

Weitere Anpassungen von Datenraten sind erforderlich, wenn Daten aus mehreren Quellen in unterschiedlichen Anforderungen übertragen werden sollen. Dies wird in der Figur 4 dargestellt. In der Figur 4 werden zwei Quelldatenströme 100 gezeigt, die durch eine erste (äußere) Blockkodierung 101 und eine nachfolgende innere Kodierung 102 kodiert werden. In einem anschließenden Verarbeitungsblock 103 erfolgt eine Anpassung der Datenrate. In der Figur 4 erfolgt jedoch diese Anpassung der Datenrate nicht zu dem Zweck, eine endgültige Anpassung an den Übertragungskanal vorzunehmen, sondern mit dem Ziel das Signalrauschverhältnis der beiden Datenquellen abzugleichen. Dies liegt darin begründet, daß für Quelldaten 100 von unterschiedlichen Datenquellen unterschiedliche Anforderungen hinsichtlich der Übertragungsqualität, das heißt hinsichtlich des Signalrauschverhältnisses bestehen. Den unterschiedlichen Qualitätsanforderungen könnte man dadurch genügen, indem die Sendeleistung, d.h. die Energie, mit der das Signal auf den Datenkanal gegeben wird, für jede dieser Datenquellen entsprechend angepaßt wird. Wenn jedoch mehrere Datenströme mit unterschiedlichen Qualitätsanforderungen über ein und denselben Übertragungskanal übertragen werden sollen, so ist diese Methode in der Regel nicht anwendbar. Eine alternative Methode besteht darin, bei der Kodierung für die Daten, die mit höherer Qualität übertragen werden sollen, entsprechend mehr Redundanz vorzusehen. Dies erfolgt in der Ratenanpassung 103 bei der in Abhängigkeit davon, mit welcher Qualität die Daten übertragen werden sollen, entsprechend mehr Redundanzinformationen vorgesehen werden. Wenn beispielsweise die Anpassung durch eine Wiederholung einzelner Bits faltungskodierten Daten des Koders 102 erfolgt, so könnte für den einen Datenstrom vorgesehen werden, daß jedes zehnte Bit wiederholt wird, während für den anderen Datenstrom mit höherenQualitätsanforderungen vorgesehen wird, daß jedes fünfte Bit wiederholt wird. Die entsprechend in der Datenrate angepaßten Ausgangssignale der Ratenanpassungsblöcke 103 werden auf einen Multiplexer 2000 gegeben, der die beiden Datenströme zu einem seriellen Datenstrom vereinigt. Dabei kann natürlich noch ein entsprechendes Interleaving der beiden Datenströme erfolgen. Im anschließenden Funktionsblock 2001 erfolgt dann eine Anpassung an die aktuelle Übertragungskapazität des entsprechenden Datenkanals 2005.

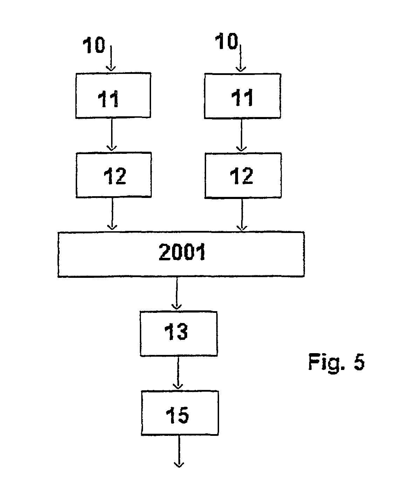

In der Figur 5 wird ein erfindungsgemäßes Verfahren zur Anpassung der Signalrauschverhältnisse von Quelldaten unterschiedlicher Datenquellen gezeigt. In der Figur 5 werden zwei Quelldatenströme 10 gezeigt, die zunächst mittels einer äußeren Blockkodierung 11 kodiert werden. Dabei werden in Abhängigkeit davon, wie das Signalrauschverhältnis für die entsprechenden Datenquellen eingestellt werden soll, mehr oder weniger Bits vorgesehen. So kann beispielsweise vorgesehen sein, daß für den einen Datenstrom (im Bild links dargestellt) für jeweils 10 Bits nur ein redundantes Bit vorgesehen ist, während beim zweiten Datenstrom (im Bild rechte Seite) für jeweils 10 Bit der Quelldaten drei redundante Bits vorgesehen sind. Entsprechend der vorgesehenen zusätzlichen redundanten Bits wird so das Signalrauschverhältnis des zweiten Datenstroms verbessert. Im darauf folgenden inneren Kodierungsschritt 12 erfolgt eine zweite Kodierung, beispielsweise durch einen Faltungs- oder Turbokoder. Die beiden so bearbeiteten Datenströme werden dann durch einen Multiplexer 2001 zu einem seriellen Datenstrom vereinigt, wobei die Datenströme dabei noch entsprechend interleavt werden können. Im darauf folgenden Funktionsblock 13 erfolgt dann noch eine Feinanpassung an die Datenrate des Übertragungskanals 15. Wenn für die Redundanz der in den beiden Blöcken 11 eingefügten Bits auf die Quelldatenrate der beiden Datenströme 10 und auf die Koderate der beiden Koder 12 optimiert wurde, werden für die Feinanpassung entsprechend wieder nur 1, 2 usw. Bits benötigt.

## Patentansprüche

1. Verfahren zum Kodieren von Quelldaten (10) mit einem Blockkodierschritt (11) und einem nachgeordneten inneren Kodierschritt, insbesondere einem Faltungskodierschritt oder Turbokodierschritt, wobei beim Blockkodierschritt (11) zur Anpassung der Datenrate an eine vorgegebene Datenrate eines Übertragungskanals *(15)* die Höhe der eingefügten Redundanz und somit der Blockgröße der blockkodierten Daten in Kenntnis der nachfolgenden Codierung durch den inneren Kodierschritt so gewählt wird, dass eine möglichst genaue Anpassung der Datenrate an den Übertragungskanal (15) erfolgt, wobei zur Anpassung der Datenrate ein Code variabler Blocklänge und variabler Redundanz gewählt wird und wobei sich der Fehlerschutz, der zum Zwecke der Anpassung der Datenrate eingeführt wird, sich auf die Gesamtheit aller Bits eines Datenrahmens erstreckt, wobei dem inneren Kodierschritt ein Feinanpassungsschritt (13) zur Anpassung der Datenrate an dem Übertragungskanal (15) zugeordnet ist.

2. Verfahren nach Anspruch 1, **dadurch gekennzeichnet, daß** die Anzahl der Bits, die vom Feinanpassungsschritt (13) korrigierbar sind, von einer Koderate des inneren kodierschrittes (12) bestimmt wird.

3. Verfahren nach Anspruch 2, **dadurch gekennzeichnet, dass** beim Feinanpassungsschritt (13) einzelne Bits punktiert werden.

4. Verfahren nach Anspruch 2, **dadurch gekennzeichnet, dass** beim Feinanpassungsschritt (13) einzelne Bits hinzugefügt werden.

5. Verfahren nach Anspruch 1, **dadurch gekennzeichnet, dass** zur Kodierung weiterer Quelldaten (10) mindestens ein weiterer Blockcodierschritt (11) vorgesehen wird, derart, dass bei der Einstellung der Redundanz und somit der Blockgröße der blockkodierten Daten des Blockkodierschritts (11) und weiteren Blockkodierschritts (11) zusätzlich noch ein gewünschtes Signalrauschverhältnis der Quelldaten berücksichtigt wird.

6. Verfahren nach Anspruch 4, **dadurch gekennzeichnet, dass** vor dem inneren Kodierschritt Bits ohne Bedeutungsinhalt hinzugefügt werden, und dass bei der Punktierung vorzugsweise diese Bits punktiert werden.

7. Verfahren nach einem der Anspruche 4 oder 6, **dadurch gekennzeichnet, dass** beim Hinzufügen von Bits vorzugsweise Bits wiederholt werden, die im Blockkodierschritt eingefügt wurden.

8. Verfahren zur Dekodierung von Daten, die nach einem der Ansprüche 1 bis 7 aufbereitet wurden und gegebenenfalls über einen Kanal übertragen wurden, **dadurch gekennzeichnet, dass** ein äußerer Blockdekodierschritt und ein nachgeordneter innerer Dekodierschritt vorgesehen werden.

9. Verfahren nach Anspruch 8, **dadurch gekennzeichnet, dass** mittels eines De-Interleaving-Schrittes die ursprüngliche Reihenfolge der kanalcodierten Daten wieder hergestellt wird.

10. Verfahren nach Anspruch 8 oder 9, **dadurch gekennzeichnet, dass** im Falle eines Feinanpassungsschrittes bei der Codierung die entsprechenden entfernten Bits wieder hinzugefügt werden und ' hinzugefügte Bits wieder entfernt werden.

## Claims

1. Method for coding source data (10) having a block coding step (11) and a subsequent internal coding step, particularly a convolution coding step or turbocoding step, where the block coding step (11) involves aligning the data rate with a prescribed data rate for a transmission channel (15) by choosing the level of the inserted redundancy and hence the block size of the block-coded data in the knowledge of the subsequent coding by the internal coding step such that the data rate is aligned with the transmission channel (15) as accurately as possible, the data rate being aligned by choosing a code of variable block length and of variable redundancy, and the error protection which is introduced for the purpose of aligning the data rate extending to the total number of all bits in a data frame, the internal coding step having an associated fine alignment step (13) for aligning the data rate with the transmission channel (15).

2. Method according to Claim 1, **characterized in that** the number of bits which can be corrected by the fine alignment step (13) is determined by a code rate for the internal coding step (12).

3. Method according to Claim 2, **characterized in that** the fine alignment step (13) involves individual bits being punctured.

4. Method according to Claim 2, **characterized in that** the fine alignment step (13) involves individual bits being added.

5. Method according to Claim 1, **characterized in that** to code further source data (10) at least one further block coding step (11) is provided such that setting the redundancy and hence the block size of the block-coded data in the block coding step (11) and the further block coding step (11) additionally takes into account a desired signal-to-noise ratio for the source data.

6. Method according to Claim 4, **characterized in that** the internal coding step is preceded by the addition of bits without meaningful content, and **in that** puncturing preferably involves these bits being punctured.

7. Method according to either of Claims 4 and 6, **characterized in that** the addition of bits preferably involves repeating bits which have been inserted in the block coding step.

8. Method for decoding data which have been conditioned according to one of Claims 1 to 7 and may have been transmitted via a channel, **characterized in that** an external block decoding step and a subsequent internal decoding step are provided.

9. Method according to Claim 8, **characterized in that** a deinterleaving step is used to restore the original order of the channel-coded data.

10. Method according to Claim 8 or 9, **characterized in that** a fine alignment step involves the appropriate removed bits being added again and added bits being removed again during the coding.

## Revendications

1. Procédé de codage de données source (10) comportant une étape de codage en blocs (11) et une étape de codage interne suivante, en particulier une étape de codage de convolution ou une étape de codage turbo, selon lequel lors de l'étape de codage en blocs (11), pour l'adaptation du débit de données à un débit de données prédéterminé d'un canal de transmission (15), la valeur de la redondance introduite et ainsi la taille de bloc des données codées en blocs, est choisie en connaissance du codage suivant par l'étape de codage interne, de telle sorte que l'on obtient une adaptation la plus précise possible du débit de données au canal de transmission (15), en choisissant pour l'adaptation du débit de données un code d'une longueur de bloc variable et d'une redondance variable, alors que le contrôle d'erreurs introduit pour l'adaptation du débit de données s'étend sur la totalité des bits d'une trame de données, l'étape de codage interne étant associée à une étape d'adaptation de précision (13) pour l'adaptation du débit de données au canal de transmission (15).

2. Procédé selon la revendication 1,
**caractérisé en ce que**
le nombre des bits qui peuvent être corrigés par l'étape d'adaptation de précision (13) est déterminé par un débit de code de l'étape de codage interne (12).

3. Procédé selon la revendication 2,
**caractérisé en ce que**
lors de l'étape d'adaptation de précision (13), des bits individuels sont repérés.

4. Procédé selon la revendication 2,
**caractérisé en ce que**
lors de l'étape d'adaptation de précision (13), des bits individuels sont ajoutés.

5. Procédé selon la revendication 1,
**caractérisé en ce que**
pour le codage d'autres données source (10), il est prévu au moins une étape de codage en blocs (11) supplémentaire, de telle sorte que lors du réglage de la redondance et ainsi de la taille de bloc des données codées en blocs de l'étape de codage en blocs (11) et d'une autre étape de codage en blocs (11), on prend en compte également un rapport signal sur bruit souhaité des données source.

6. Procédé selon la revendication 4,
**caractérisé en ce qu'**
avant l'étape de codage interne, des bits sans contenu significatif sont ajoutés, et lors du repérage, ces bits sont de préférence repérés.

7. Procédé selon l'une des revendications 4 ou 6,
**caractérisé en ce que**
lors de l'ajout de bits, on répète de préférence les bits qui sont introduits dans l'étape de codage en blocs.

8. Procédé de décodage de données, qui ont été traitées selon l'une des revendications 1 à 7 et qui ont le cas échant été transmises par le biais d'un canal,
**caractérisé en ce qu'**
il est prévu une étape de codage en blocs externe et une étape de décodage interne suivante.

9. Procédé selon la revendication 8,
**caractérisé en ce que**
l'ordre initial des données codées par canal est rétabli au moyen d'une étape de dé-entrelacement.

10. Procédé selon la revendication 8 ou 9,
**caractérisé en ce que**
dans le cas d'une étape d'adaptation de précision lors du codage, les bits écartés en conséquence sont à nouveau ajoutés et les bits ajoutés sont à nouveau écartés.
